# EUROPEAN PATENT SPECIFICATION

(11) **EP 4 220 093 B1**
(45) Date of publication and mention of the grant of the patent: **24.12.2025**
(21) Application number: 22154049.5
(22) Date of filing: 28.01.2022
(51) Int. Cl.: G01D 5/244

(54) **ROTARY ENCODER AND A METHOD FOR MONITORING OPERATION OF THE ROTARY ENCODER**
DREHWERTGEBER UND VERFAHREN ZUR ÜBERWACHUNG DES BETRIEBS DES DREHWERTGEBERS
ENCODEUR ROTATIF ET PROCÉDÉ PERMETTANT DE SURVEILLER LE FONCTIONNEMENT DE L'ENCODEUR ROTATIF

(43) Date of publication of application: 02.08.2023
(73) Proprietor: LEINE & LINDE AB, 645 21 Strängnäs (SE)
(72) Inventor: GUSTAFSSON, Mats, 645 96 Stallarholmen (SE); LUNDGREN, Martin, 645 34 Strängnäs (SE); JOHANSSON, Robin, 645 33 Strängnäs (SE)
(74) Representative: Zacco Sweden AB

(56) References cited:
- EP-A1- 2 937 165
- US-A1- 2004 196 027
- US-A1- 2009 116 777
- US-A1- 2021 270 644

## Description

### TECHNICAL FIELD

The present invention relates to a rotary encoder, the rotary encoder comprising a rotor and a shaft having a bearing configuration. The invention relates to a method for determining malfunction of the bearing configuration of the rotary encoder. The invention relates also to a computer program product comprising program code for a computer for implementing a method according to the invention.

### BACKGROUND ART

Rotary encoders are used in industry for position and speed monitoring and are typically mounted on a shaft of a motor or a gearbox of an assembly. Rotary encoders may be equipped with a rotor unit and a stator unit for detecting operational parameters of the shaft of the assembly.

Rotary encoders are assembled with different shafts and bearings. In case bearings of the rotary encoder are blocked or get sluggish a driving torque on the rotary encoder shaft is increased and may eventually lead to that a connection between the rotary encoder shaft and the shaft of the assembly will break.

US 2021/270644 A1 discloses a method for determining malfunction of a rotary encoder. A driving torque of the bearing configuration is increased to a certain level due to the bearing configuration being blocked or becoming sluggish. A distance between the rotor and the stator is increased by a spring member being in a compression state.

### SUMMARY OF THE INVENTION

An object of the present disclosure is to provide a rotary encoder, which seeks to mitigate, alleviate, or eliminate one or more of the above-identified deficiencies in the art.

Another object of the present invention is to propose a novel and advantageous method providing a more reliable and safe operation of a rotary encoder.

Yet another object of the invention is to propose a method and a computer program achieving an automated and user-friendly monitoring of operation of a bearing configuration of a rotary encoder.

These and other objects are achieved by a rotary encoder according to claim 1, a method for determining malfunction of a bearing configuration of a rotary encoder according to claim 7, a computer program product according to claim 9 and a computer readable storage medium according to claim 10.

By means of the rotary encoder according to the invention, a state of malfunction of the bearing configuration is determined based on detected tension and/or compression. Hereby malfunction of the bearing configuration may be determined in an efficient and reliable way so that extensive damage associated with malfunctioning of an assembly comprising said rotary encoder is avoided. Further, operation of an associated assembly may be interrupted before severe damage or wear of components of the assembly and/or the rotary encoder occur. Hereby high standards of operation, involving a small number of unexpected disturbances, may be upheld. The expected service time of the bearing configuration may be substantially upheld due to reduction of risk for continued operation of the rotary encoder having malfunctioning components. Also, this allows to a further extent make use of data collected by the rotary encoder for statistics purposes.

By means of the invention, an operation monitoring process of the bearing configuration is easily and efficiently obtained. Hereby tension and/or compression may be detected in an efficient and reliable way so that malfunction of the bearing configuration may be easily determined.

According to an embodiment of said rotary encoder, said flexible structure of said housing may be efficiently provided so as to, in connection with rotation of said shaft, facilitate transmitting forces associated with said bearing configuration to said strain sensor arrangement.

According to an embodiment of said rotary encoder, said support member comprises a first connection portion attached to said inner ring shaped portion and a second connection portion attached to said outer ring shaped portion. Hereby, relative movement of said inner and outer ring shaped portions of said housing for detection of tension and/or compression by means of said strain sensor arrangement may be efficiently obtained.

According to an embodiment of said rotary encoder said support member comprises a first connection portion attached to said inner ring shaped portion, a second connection portion attached to said outer ring shaped portion and a third connection portion attached to said outer ring shaped portion, wherein said first connection portion is arranged between said second and third connection portion. Hereby relative movement of said inner and outer ring shaped portions of said housing for detection of both tension and compression, associated with the same relative rotation of the housing, by means of said strain sensor arrangement may be efficiently obtained.

According to an embodiment of the rotary encoder, said strain sensor arrangement is arranged to determine that a malfunction of the bearing configuration is at hand if said detected tension and/or compression is changed to a certain extent. Said certain extent may be set as an absolute value of a predetermined value, also denoted predetermined threshold value. Herein detected tension values are positive values and detected compression values are negative values. Hereby malfunction of the bearing configuration may be determined in an efficient and reliable way.

The rotary encoder may be applicable to paper mill systems and rolling mills. The rotary encoder disclosed herein may be applicable to elevator systems, oil rig systems and various machine tools. The rotary encoder may thus be applicable to a great variety of assemblies.

The rotary encoder may be applicable to various assemblies comprising an engine/motor for rotating a shaft. The assembly may be a vehicle such as a mining machine, tractor, dumper, wheel-loader, forest machine, earth mover, road construction vehicle, road planner, emergency vehicle or a tracked vehicle. The proposed rotary encoder is well suited to other applications that comprise a rotary shaft than vehicles, e.g. watercraft. The watercraft may be of any kind, e.g. motorboats, steamers, ferries, ships or submarines.

The rotary encoder is applicable to various stationary assemblies/platforms comprising a rotating shaft, such as a windmill for generating electricity.

Herein the term "strain sensor" is used. The strain sensor may according to one example comprise a strain gauge which is used to measure strain on an object, i.e. the housing of the rotary encoder. One type of strain gauge comprises an insulating flexible backing which supports a metallic foil pattern. As the object is deformed, the foil is deformed, causing its electrical resistance to change. This resistance change, which may be measured by means of a Wheatstone bridge, is related to the strain by a quantity known as the gauge factor. It should however be noted that any suitable strain sensor may be used according to the rotary encoder proposed herein.

Further objects, advantages and novel features of the present invention will become apparent to one skilled in the art from the following details, and also by putting the invention into practice.

### BRIEF DESCRIPTION OF THE DRAWINGS

For fuller understanding of embodiments of the present invention and its further objects and advantages, the detailed description set out below should be read in conjunction with the accompanying drawings, in which the same reference notations denote similar items in the various diagrams, and in which:
Figure 1a schematically illustrates a cross-sectional view of a rotary encoder according to an embodiment of the present disclosure;
Figure 1b schematically illustrates a front view of the rotary encoder in Figure 1a according to an embodiment of present disclosure;
Figure 2 schematically illustrates a front view of the rotary encoder in Figure 1a according to an embodiment of present disclosure;
Figure 3a schematically illustrates a perspective view of the rotary encoder in Figure 1a according to an embodiment of present disclosure;
Figure 3b schematically illustrates a side view of the rotary encoder in Figure 1a according to an embodiment of present disclosure;
Figure 4a schematically illustrates an exploded view of the rotary encoder in Figure 1a according to an embodiment of present disclosure;
Figure 4b schematically illustrates another exploded view of the rotary encoder in Figure 1a according to an embodiment of present disclosure;
Figure 5 is a schematic flowchart of a method according to an embodiment of the present disclosure; and
Figure 6 schematically illustrates a computer according to an embodiment of the present disclosure.

### DETAILED DESCRIPTION

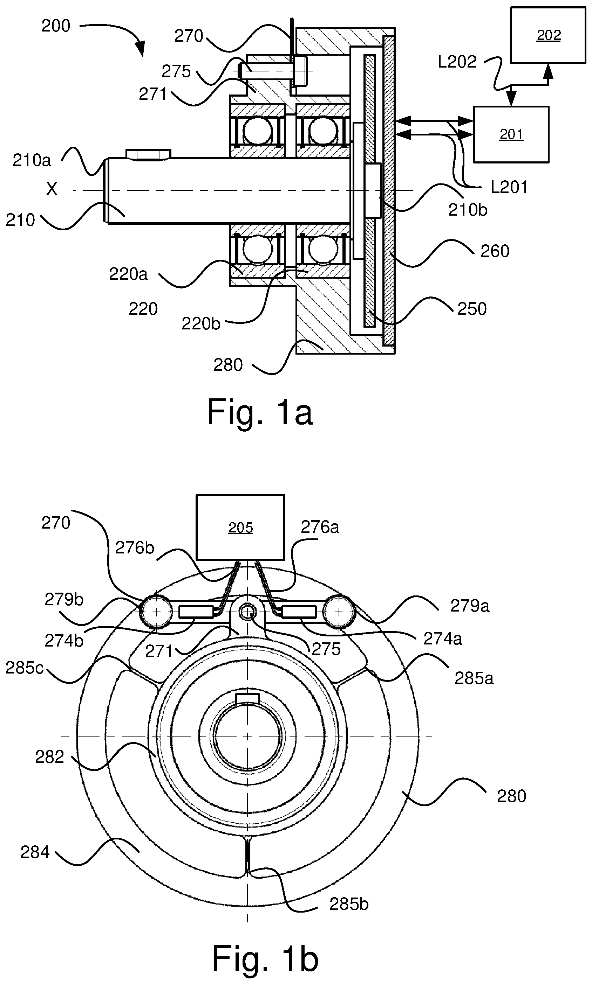

Fig. 1a-b, 2, 3a-b and 4a-b schematically illustrates different views of a rotary encoder 200 according to an embodiment of the present disclosure.

The rotary encoder 200 comprises a shaft 210. The shaft 210 has a first end portion 210a and an opposite second end portion 210b. Said shaft 210 is configured to rotate about an axis X.

The rotary encoder 200 comprises a bearing housing 280. Herein the bearing housing 280 is also denoted housing 280. Said housing 280 is arranged to house a bearing configuration 220. The housing 280 may consist of any suitable material, such as a metal or alloy, e.g. aluminium or stainless steel. The housing 280 may consist at least partly of a plastic material. The housing 280 may consist at least partly of a ceramic.

The bearing configuration 220 comprises a first bearing unit 220a. The first bearing unit 220a is arranged to be fixedly arranged to the shaft 210. The first bearing unit 220a may comprise any suitable bearings. The bearing configuration 220 comprises a second bearing unit 220b. The second bearing unit 220b is arranged to be fixedly arranged to the shaft 210. The second bearing unit 220b may comprise any suitable bearings. The bearing configuration 220 is configured to allow rotation of the shaft 210 relative to said housing 280.

According to an aspect of the present disclosure the first bearing unit 220a and second bearing unit 220b are arranged next to each other around the shaft 210. The first bearing unit 220a and second bearing unit 220b may according to one example be arranged separated by a predetermined distance from each other around the shaft 210. The second bearing unit 220b is arranged closer to the second end portion 210b of the shaft 210 than the first bearing unit 220a.

The respective bearing unit 220a, 220b has an inner ring shaped portion configured to be arranged around and attached to said shaft 210, and an outer ring shaped portion configured to be connected to said housing 280. The first bearing unit 220a and the second bearing unit 220b are fixedly secured to the housing 280 at the respective outer ring shaped portions.

According to one example there is provided least two bearing units at the shaft 210 for achieving a balanced and low-vibration operation of the rotary encoder 200.

The shaft 210 is configured to be attached to a rotating device of an assembly, such as an assembly exemplified herein. The rotary encoder 200 is arranged to determine values of a set of operational parameters of the shaft 210. The operational parameters may be characteristics of operation of the assembly. According to one example the set of operational parameters may comprise the parameter "prevailing angular position of the shaft 210". According to one example the set of operational parameters may comprise any of the parameters: prevailing angular position of the shaft 210 and rotational speed of the shaft 210.

According to one example the shaft 210 may be connectable to a rotating device of the assembly by any suitable fastening means. This allows a connection in a rotatable fixed manner. According to one example a connection between the shaft 210 and a rotating device of the assembly is performed via a shaft coupling device.

The rotary encoder 200 works by being configured to detect relative rotation of a rotor 250 and a stator 260. The rotor 250 is arranged to be fixedly secured at the shaft 210. Said rotor 250 is arranged to be attached to said shaft 210 in connection to said second end portion 210b of said shaft 210. Said rotor 250 is configured to rotate with said shaft 210.The rotation of the rotor 250 with respect to the stator 260 may be detected using any technology capable of detecting such changes. Examples of such technologies include capacitive, optical, inductive and/or magnetic detection. The rotary encoder 200 may be configured as an incremental and/or an absolute rotary encoder. The terms rotor and stator may refer to single components as well as aggregates serving a common function of rotor or stator.

According to an aspect of the present disclosure, said stator 260 is arranged to be attached to said housing 280 in connection to said second end portion 210b of said shaft 210. Said stator 260 is configured to be fixed relative to said shaft 210 so that said shaft 210 rotates relative to said stator 260.

The rotor 250 further comprises a first disc having a scale for detection of relative rotation between the rotor 250 and the stator 260. The first disc is mounted at the shaft 210. When the shaft 210 rotates with respect to the stator 260, rotation measurement circuitry at the stator 260 can detect changes in the scale with respect to the rotation measurement circuitry. For instance, the scale may comprise inductive, capacitive and/or magnetic elements configured to cause a corresponding inductive, capacitive or magnetic signal when the first disc is rotated with respect to the stator 260. The scale may be part of an optical rotary encoder wherein the rotary encoder is configured to shine a light onto a photodiode through slits in the first disc. Alternatively, a reflective version of an optical rotation measurement technology for an optical rotary encoder may be used. Alternatively, any suitable components being arranged for detecting operational parameters may be used in the rotary encoder 200. The components are chosen on the basis of the operation parameter detection method of the rotary encoder 200.

The stator 260 comprises a second disc. The second disc comprises measurement apparatus configured to detect relative motion of the first and second discs, e.g. by detecting said inductive, optical, capacitive or magnetic signals. The second disc may be a printed circuit board. According to one example the stator 260 is not disc-shaped and may be denoted "scanner" or "scanning unit". ". Hereby, according to one example, Solid measure according to 61800-5-3 is provided.

The rotor 250 may be denoted "graduation carrier" or "code disc". The stator 260 may be denoted "detector". Hereby, according to one example, Solid measure according to 61800-5-3 is provided.

The inner ring shaped portion of the respective bearing unit 220a, 220b has an inner side and an opposite outer side, said inner side being configured to face the shaft and being configured to be arranged around and fixedly attached to said shaft 210.

The outer ring shaped portion the respective bearing unit 220a, 220b has an inner side and an opposite outer side, said outer side being configured to face the inner side 282a of the inner ring shaped portion 282 of said housing 280 and is configured to be fixedly secured to said inner side 282a of the inner ring shaped portion 282. The outer side of the inner ring shaped portion of the respective bearing unit 220a, 220b is configured to face the inner side of the outer ring shaped portion of the respective bearing unit 220a, 220b, wherein bearing ball members of the respective bearing unit 220a, 220b are arranged and distributed between the inner ring shaped portion and outer ring shaped portion of the respective bearing unit 220a, 220b so as to facilitate rotation of the shaft 210 relative to said housing 280. The rotary encoder may be provided with any suitable bearing units, e.g. plain bearings or roller bearings.

According to an aspect of the present disclosure, said housing 280 comprises an inner ring shaped portion 282 and an outer ring shaped portion 284. Said outer ring shaped portion 284 is arranged to at least partly surround said inner ring shaped portion 282.

Said inner ring shaped portion 282 has an inner side 282a and an opposite outer side 282b. Said outer ring shaped portion 284 has an inner side 284a and an opposite outer side 284b. At least a portion of said outer side 282b of said inner ring shaped portion 282 is configured to face at least a portion of said inner side 284a of said outer ring shaped portion 284.

According to an aspect of the present disclosure, said inner ring shaped portion 282 has a first end 282c facing in the axial direction and an opposite second end 282d facing in the opposite axial direction. According to an aspect of the present disclosure, said outer ring shaped portion 284 has a first end 284c facing in the axial direction and an opposite second end 284d facing in the opposite axial direction. The first end 282c of said inner ring shaped portion 282 is configured to face in the same direction as the first end 284c of said outer ring shaped portion 284. The second end 282d of said inner ring shaped portion 282 is configured to face in the same direction as the second end 284d of said outer ring shaped portion 284.

According to an aspect of the present disclosure, said inner ring shaped portion 282 and outer ring shaped portion 284 are configured to be connected via a set of flexible members 285a, 285b, 285c. According to an aspect of the present disclosure, said inner ring shaped portion 282 and outer ring shaped portion 284 are configured to be connected via said set of flexible members 285a, 285b, 285c between said outer side 282b said inner ring shaped portion 282 and said inner side 284a of said outer ring shaped portion 284. According to an aspect of the present disclosure, said set of flexible members 285a, 285b, 285c are configured to be arranged between said outer side 282b of said inner ring shaped portion 282 and said inner side 284a of said outer ring shaped portion 284 so as to provide said connection of said inner ring shaped portion 282 and outer ring shaped portion 284.

According to an aspect of the present disclosure, said housing 280 comprises said set of flexible members 285a, 285b, 285c configured to connect said inner ring shaped portion 282 and outer ring shaped portion 284. According to an aspect of the present disclosure, said inner ring shaped portion 282, said outer ring shaped portion 284 and said set of flexible members 285a, 285b, 285c are configured to provide an integrated part of said housing 280.

Thus, according to an aspect of the present disclosure, said set of flexible members 285a, 285b, 285c are configured to provide an integrated transition between said inner ring shaped portion 282 and said outer ring shaped portion 284. According to an alternative aspect of the present disclosure, said set of flexible members 285a, 285b, 285c are constituted by separate parts configured to be attached between said inner ring shaped portion 282 and outer ring shaped portion 284 of said housing so as to provide said connection of said inner ring shaped portion 282 and outer ring shaped portion 284. According to one example the space between outer ring surface 284a and inner ring surface 282b can be filled with a flexible material.

According to an aspect of the present disclosure, said set of flexible members 285a, 285b, 285c are provided by spokes 285a, 285b, 285c distributed between said inner ring shaped portion 282 and outer ring shaped portion 284 so as to provide said connection of said inner ring shaped portion 282 and outer ring shaped portion 284. According to an aspect of the present disclosure, said spokes 285a, 285b, 285c distributed between said inner ring shaped portion 282 and outer ring shaped portion 284 are configured to run in a radial direction between the outer side 282b of said inner ring shaped portion 282 and the inner side 284a of said outer ring shaped portion 284. In the embodiment illustrated e.g. in Fig. 1b, Fig. 3a and Fig. 4b said set of flexible members 285a, 285b, 285c are provided by three spokes 285a, 285b, 285c evenly distributed between said inner ring shaped portion 282 and outer ring shaped portion 284. Said set of flexible members may be any provided by any suitable number of such spokes, e.g. two spokes, four spokes, five spokes or more.

According to an aspect of the present disclosure, said first end 282c of the inner ring shaped portion 282 and said first end 284c of the outer ring shaped portion 284 are configured to face away from said stator 260. According to an aspect of the present disclosure, said second end 282d of the inner ring shaped portion 282 and said second end 284d of the outer ring shaped portion 284 are configured to face towards said stator 260.

The rotary encoder comprises a strain sensor arrangement 270, 274a, 274b, 276a, 276b, 205, 600 configured to determine malfunction of the bearing configuration 220. Said strain sensor arrangement is attached to the housing 280.

The housing 280 has a flexible structure so as to, in connection to rotation of said shaft 210, facilitate transmitting forces associated with said bearing configuration 220 to said strain sensor arrangement. According to an aspect of the present disclosure said flexible structure of said housing 280 is configured to be provided by means of the arrangement of the housing comprising said inner ring shaped portion 282, said outer ring shaped portion 284 arranged to at least partly surround said inner ring shaped portion 282 and said set of flexible members 285a, 285b, 285c connecting said inner and outer ring shaped portions 282, 284.

Said strain sensor arrangement is arranged to detect tension and/or compression associated with said housing 280. A malfunction of the bearing configuration 220 is arranged to be determined based on said detected tension and/or compression.

According to an aspect of the present disclosure, said strain sensor arrangement comprises at least one strain sensor 274a, 274b configured to detect tension and/or compression and a support member 270 for supporting said at least one strain sensor 274a, 274b.

According to an aspect of the present disclosure, said support member 270 is configured to be attached to the housing 280 in such a way that detection of tension and/or compression by means of said at least one strain sensor is facilitated.

According to an aspect of the present disclosure, said support member 270 comprises a first connection portion 271, 275 attached to said inner ring shaped portion 282 of said housing 280.

According to an aspect of the present disclosure, said first connection portion 271, 275 of said support member 270 comprises a protrusion member 271 configured to protrude outwardly from the outer side 282b of said inner ring shaped portion 282 so as to facilitate connection and support of said at least one strain sensor 274a, 274b.

Said protrusion member 271 comprises a recess 271a arranged in said protrusion member 271. According to an aspect said recess 271a is arranged to run in the axial direction of said inner ring shaped portion 282. According to an aspect said recess 271a is shaped as a through hole arranged to run in the axial direction through said protrusion member 271.

Said first connection portion 271, 275 of said support member 270 comprises an attachment member 275 for attaching said at least one strain sensor 274a, 274b to said protrusion member 271. According to an aspect of the present disclosure, said attachment member 275 is configured to be introduced into said recess 271a so as to provide attachment of said at least one strain sensor 274a, 274b to said protrusion member 271. Said recess 271a in said protrusion member 271 is thus configured to receive said attachment member 275. Said attachment member 275 may be any suitable attachment member 275 such as a screw joint or the like.

According to an aspect of the present disclosure, said support member 270 comprises an elongated support element 278. According to an aspect of the present disclosure, said elongated support element 278 is arranged to support said at least one strain sensor 274a, 274b. According to an aspect of the present disclosure, said at least one strain sensor 274a, 274b is configured to be connected to said elongated support element 278.

According to an aspect of the present disclosure, said elongated support element 278 has a first through hole 278c configured to be centrally arranged in said elongated support element 278. According to an aspect of the present disclosure, said elongated support element 278 has a second through hole 278a configured to be arranged in connection to a first end of said elongated support element 278. According to an aspect of the present disclosure, said elongated support element 278 has a third through hole 278b configured to be arranged in connection to a second end of said elongated support element 278, opposite to said first end. According to an aspect of the present disclosure, said first through hole 278c is configured to be arranged between said second through hole 278a and said third through hole 278b.

According to an aspect of the present disclosure, said strain sensor arrangement comprises a first strain sensor 274a configured to be connected to said elongated support element 278 between said centrally arranged first through hole 278c and said second through hole 278a. According to an aspect of the present disclosure, said strain sensor arrangement comprises a second strain sensor 274b configured to be connected to said elongated support element 278 between said centrally arranged first through hole 278c and said third through hole 278b.

According to an aspect of the present disclosure, said strain sensor arrangement comprises a first electrical wire configuration 276a connected to said first strain sensor 274a so that changes of electrical properties of said first strain sensor 274a based on said tension and/or compression is transferred to said first electrical wire configuration 276a for facilitating determining malfunction of the bearing configuration 220. According to an aspect of the present disclosure, said strain sensor arrangement comprises a second electrical wire configuration 276b connected to said second strain sensor 274b so that changes of electrical properties of said second strain sensor 274b based on said tension and/or compression is transferred to said second electrical wire configuration 276b for facilitating determining malfunction of the bearing configuration 220. The first electrical wire configuration 276a and the second electrical wire configuration 276b are connected to a measuring unit 205.

According to an aspect of the present disclosure, said support member 270 comprises a second connection portion 279a attached to said outer ring shaped portion 284 of said housing 280. According to an aspect of the present disclosure, said support member 270 comprises a third connection portion 279b attached to said outer ring shaped portion 284 of said housing 280. According to an aspect of the present disclosure, said first connection portion 271, 275 is arranged between said second and third connection portion 279a, 279b.

According to an aspect of the present disclosure, said second connection portion 279a and third connection portion 279b are configured to attach said elongated support element 278 to said outer ring shaped portion 284. According to an aspect of the present disclosure, said second connection portion 279a and third connection portion 279b are configured to attach said elongated support element 278 to said first end 284c of said outer ring shaped portion 284.

According to an aspect of the present disclosure, said outer ring shaped portion 284 comprises a first recess 284c-1 arranged in connection to said first end 284c and a second recess 284c-2 arranged in connection to said first end 284c at a predetermined distance from said first recess 284c-1 for facilitating attachment of said elongated support element 278. According to an aspect of the present disclosure, said first recess 284c-1 and second recess 284c-2 are configured to run in the axial direction of said outer ring shaped portion 284 between the inner side 284a and outer side 284b a certain distance into said outer ring shaped portion 284.

According to an aspect of the present disclosure, said first recess 284c-1 is configured to receive said second connection portion 279a via said second through hole 278a of said elongated support element 278 so as to provide attachment of said elongated support element 278 and hence said at least one strain sensor 274a, 274b to said outer ring shaped portion 284 of said housing 280.

According to an aspect of the present disclosure, said second recess 284c-2 is configured to receive said third connection portion 279b via said third through hole 278b of said elongated support element 278 so as to provide attachment of said elongated support element 278 and hence said at least one strain sensor 274a, 274b to said outer ring shaped portion 284 of said housing 280.

According to an aspect of the present disclosure, said recess 271a of said protrusion member 271 is configured to receive said attachment member 275 via said first through hole 278c of said elongated support element 278 so as to provide attachment of said elongated support element 278 and hence said at least one strain sensor 274a, 274b to said inner ring shaped portion 282 of said housing 280.

According to an aspect of the present disclosure, said first recess 284c-1 and said second recess 284c-2 of said outer ring shaped portion 284 are arranged on essentially the same level as said recess 271a of said protrusion member 271 so as to facilitate attachment of said elongated support element 278 via said through holes 278a, 278b, 278c. Said recess 271a of said protrusion member 271 is according to this embodiment arranged between said first recess 284c-1 and said second recess 284c-2 of said outer ring shaped portion 284.

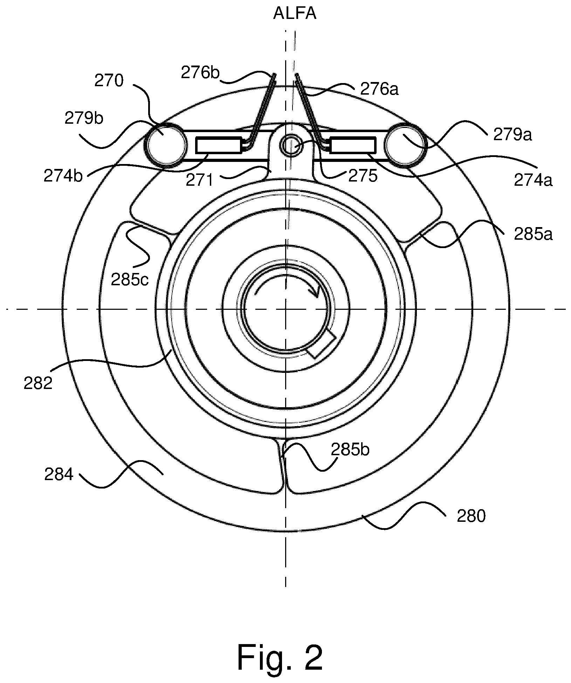

According to an aspect of the present disclosure, said strain sensor arrangement is arranged to determine that a malfunction of the bearing configuration 220 is at hand if said detected tension and/or compression is changed to a certain extent. According to an aspect of the present disclosure, said strain sensor arrangement is arranged to determine that a malfunction of the bearing configuration 220 is at hand if said detected tension and/or compression is changed to a certain extent by means of detecting a certain rotation of said inner ring shaped portion 282 relative to said outer ring shaped portion 284. This is exemplified in Fig. 2, schematically illustrating a front view of the rotary encoder 200 in Fig. 1a, where said protrusion member 271, due to relative rotation between said inner ring shaped portion 282 and outer ring shaped portion 284 has moved from a central position relative to said elongated support element 278 towards one of the ends of said elongated support element 278. Thus, a relative rotation between said inner ring shaped portion 282 and outer ring shaped portion 284 has occurred so that said protrusion member 271 has moved a certain angle relative to its original position.

A control arrangement 201 is arranged for communication with the rotary encoder 200 via a link L201. According to one embodiment the control arrangement 201 is arranged for communication with the rotation measurement circuitry at the stator 260 via the link L201. Hereby the stator 260 is arranged to send signals comprising information about operational parameters to the control arrangement 201 via the link L201.

The control arrangement 201 is arranged to determine values of the operational parameters and to present determined values of the operational parameters via any suitable presentation means, e.g. presentation means 202, to an operator of the assembly and/or the rotary encoder 200. Alternatively or additionally, the control arrangement 201 is arranged to generate control signals for a motor drive (not shown) based on the operational parameters.

According to one embodiment the rotation measurement circuitry at the stator 260 may be arranged to perform the same functions as the control arrangement 201. Herein detection of operational parameters may be performed by any of the rotation measurement circuitry at the stator 260 and/or the control arrangement 201.

The rotary encoder 200 may further be configured for electromagnetic compatibility scenarios. The housing 280 of the rotary encoder 200 may be arranged to fixate and protect fragile EMC components from vibrations. According to some aspects, the rotary encoder 200 further comprises electrostatic discharge, ESD, shielding arranged to shield the rotary encoder 200 from electrostatic charge and/or discharge. According to some aspects, the rotary encoder 200 further comprises electromagnetic shielding arranged to prevent electromagnetic radiation to and/or from the rotary encoder 200 exceeding a predetermined threshold. According to some aspects, the rotary encoder 200 is configured to function without degradation in the presence of a predetermined electromagnetic disturbance. In other words, according to some aspects, the rotary encoder 200 is configured to be electromagnetically immune to a predetermined radio frequency interference.

According to some aspects, the rotary encoder 200 further may comprise a set of sealing components arranged at the rotary encoder 200. The set of sealing components is arranged to seal the rotary encoder 200 from an environment.

According to some aspects, the rotary encoder 200 comprises a set of spacers. The set of spacers is configured to fix a relative position between two or more components of the rotary encoder 200.

The control arrangement 201 is arranged for communication with the presentation means 202 via a link L202. Said presentation means 202 may comprise a display for visual presentation to an operator. The presentation means may comprise visual/audio/tactile presentation devices for presenting information about operational status of the rotary encoder 200. In particular the presentation means 202 is arranged to present information to an operator when malfunction of the bearing configuration 220 has been determined according to the disclosure herein.

According to an embodiment of the disclosure the control arrangement 201 is arranged to generate an alarm signal when malfunction of the bearing configuration 220 is at hand. Hereby the control arrangement 201 is arranged to provide the alarm signal to any means, such as the presentation means 202. The alarm signal is provided so as to indicate malfunctioning of the bearing configuration 220 to an operator.

According to an embodiment of the disclosure the control arrangement 201 is arranged to automatically interrupt operation of the assembly connected to rotary encoder 200 when malfunction of the bearing configuration 220 is at hand. According to an embodiment the control arrangement 201 is arranged to automatically interrupt operation of the assembly connected to rotary encoder 200 when malfunction of the bearing configuration 220 has been detected according to the disclosure herein.

According to an embodiment of the disclosure the strain sensor arrangement is arranged to generate and transmit a discrete signal for automatically disconnect an emergency stop circuit when the operational operation is not at hand (malfunctioning of at least one of the bearing units 220a, 220b has been detected). Hereby operation of the assembly may be automatically shut down when malfunction of at least one of the bearing units 220a, 220b is at hand.

Figure 1b schematically illustrates a front view of the rotary encoder 200 according to an embodiment of the disclosure. Reference is made to e.g. the disclosure of Fig. 1a.

The measuring unit 205 is connected to the first strain sensor 274a and the second strain sensor 274b via the first electrical wire configuration 279a and the second electrical wire configuration 279b, respectively. The measuring unit 205 is arranged to detect a prevailing tension and/or compression of the housing 280. The measuring unit 205 may comprise one or more electronic control arrangement(s) or suitable circuitry for transmitting information relating to the detected tension/compression to the control arrangement 201 via a link. This link could be a separate link, or it could be part of the link L201 as depicted in figure 1a as a parallel link, a link which may comprise one or more additional signal lines. Alternatively, the link L201 may be a serial data interface and the information is transmitted by means of data frames. The data may also contain values of operational parameters. The circuit of the measuring unit 205 will usually be located either on a separate printed circuit board (PCB) or on the PCB of the stator 260, by means of which any of the mentioned PCBs is at least indirectly attached to the housing 280. The measuring unit 205 is according to one example comprising a power source for providing electricity for strain measurements. The power source may be an electric battery.

Hereby the operation of the rotary encoder is running in a "normal", functioning, state. This state is referred to as a first operational state. In particular, the bearing configuration 220, comprising the first bearing unit 220a and the second bearing unit 220b, is operating without any malfunctioning. In the first operational state the inner ring shaped portion 282 is aligned with the outer ring shaped portion 284, i.e. no relative angular displacement between the inner portion 282 and the outer portion 284 is at hand. There is thus no, or little (less than a certain extent, or less than a predetermined value) detected tension and/or compression. During operation of the rotary encoder 200 in the first operational state it is determined that there is no relative displacement in a rotational direction between the inner portion 282 and the outer portion 284 at hand. In the first operational state there is no detected malfunction of the bearing configuration 220.

Figure 2 schematically illustrates a front-view of the rotary encoder 200. Hereby the operation of the rotary encoder is running in a "non-normal", malfunctioning, state. This state is referred to as a second operational state. In particular, the bearing configuration 220, comprising the first bearing unit 220a and the second bearing unit 220b, is not operating correctly. In the second state the inner ring shaped portion 282 is moved in a rotational direction relative the outer ring shaped portion 284. This is caused by at least one malfunctioning bearing unit 220a, 220b and allowed by the flexible structure of the housing 280 by the flexible members 285a, 285b and 285c. It is noted that the inner ring shaped portion 282 has been rotated clockwise to a certain extent, herein indicated by the displacement angle ALFA. During operation of the rotary encoder 200 in the second operational state it is determined that there is a detected tension/compression at hand, which tension/compression is exceeding a predetermined value. This predetermined value may have been empirically determined. Adequate threshold values relating to said detected tension and compression are compared with the respective prevailing detected tension and compression values. In the second operational state it is hereby determined that malfunction of the bearing configuration 220 is at hand. The measuring unit 205 and/or the control arrangement 201 are configured to determine if malfunction of the bearing configuration is at hand based on said comparison(s).

By determining both tension values and compression values at the same time more accurate measurements may be performed. Hereby redundancy is achieved in a case where one of the sensor units is not working properly. Data relating to the measured tension and compression values may be used for purposes of condition monitoring of the bearing configuration 220.

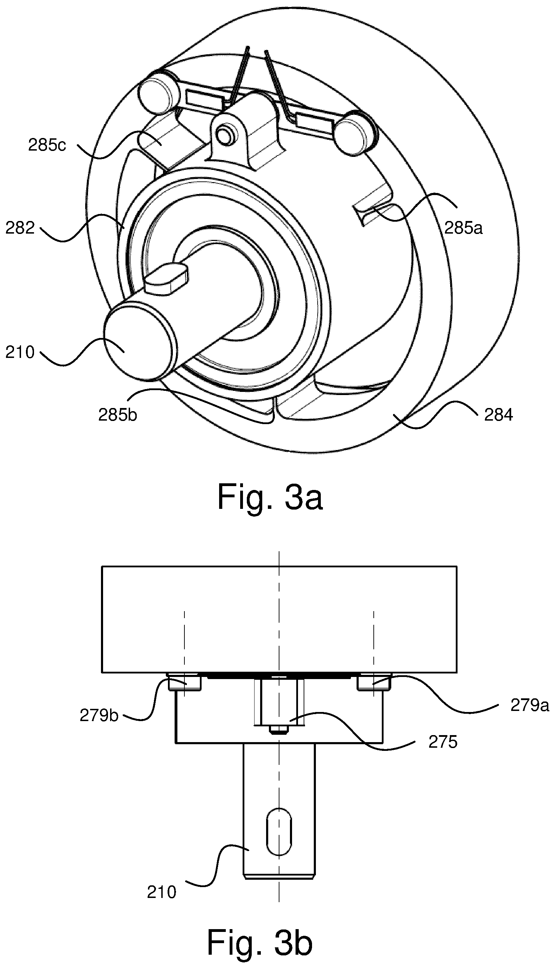

Figure 3a schematically illustrates a perspective view of the rotary encoder 200 according to an embodiment of the disclosure. Reference is made to e.g. the disclosure related to Fig. 1a-b and Fig. 2.

Figure 3b schematically illustrates a side view of the rotary encoder 200 according to an embodiment of the disclosure. Reference is made to e.g. the disclosure related to Fig. 1a-b and Fig. 2.

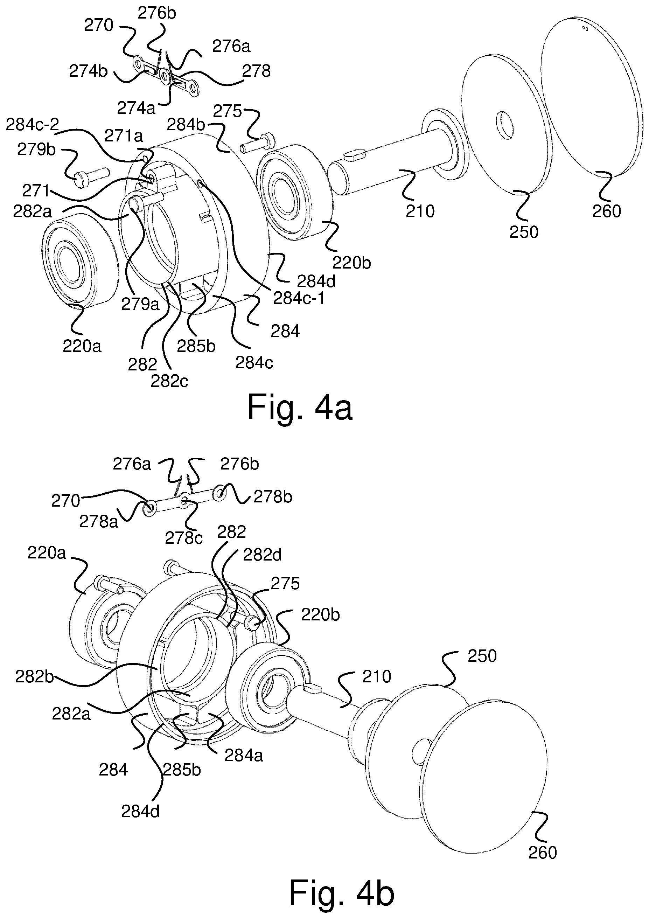

Figure 4a schematically illustrates an exploded view of the rotary encoder 200 according to an embodiment of the disclosure. Reference is made to e.g. the disclosure related to Fig. 1a-b and Fig. 2.

Figure 4b schematically illustrates an exploded view of the rotary encoder 200 according to an embodiment of the disclosure. Reference is made to e.g. the disclosure related to Fig. 1a-b and Fig. 2.

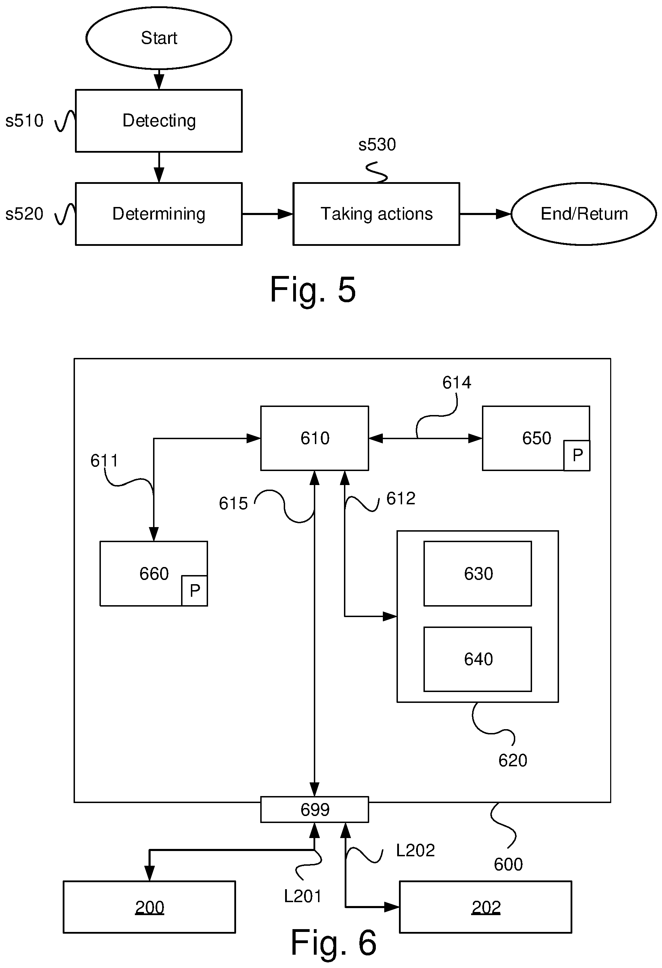

Figure 5 is a schematic flowchart of a method according to an embodiment of the disclosure. Hereby is provided a method for determining malfunction of the bearing configuration 220 of the rotary encoder 200. The rotary encoder 200 comprises the shaft 210 having said bearing configuration 220 arranged in the housing 280, wherein the housing 280 has a flexible structure. The bearing configuration 220 is configured to allow rotation of the shaft 210 relative to said housing 280. The rotary encoder 200 comprises the rotor 250 which is attached to said shaft 210. The rotary encoder 200 also comprises the stator 260.

The method comprises a first method step s510. The first method step s510 comprises the step of detecting tension and/or compression associated with said housing 280 in connection to rotation of said shaft 210, wherein said tension and/or compression is caused by transmitted forces associated with said bearing configuration 220. According to one example detection of said tension and/or compression is performed by means of the strain sensor arrangement, which arrangement comprises e.g. the first and second strain sensors 274a and 274b, the measuring unit 205 and the control arrangement 201. Said detection may be performed continuously. Said detection may be performed intermittently. Data relating to said detected tension and/or compression may be transmitted to an external monitoring system. Data relating to said detected tension and/or compression may be transmitted to a SCADA-system. Said transmitted data may be used for logging purposes and/or evaluation purposes and/or analysis purposes. Said data may be transmitted continuously

The method comprises a second method step s520. The second method step s520 comprises the step of determining malfunction of the bearing configuration 220 based on said detected tension and/or compression. This is according to an embodiment performed by means of the strain sensor arrangement disclosed herein. In a case where relative rotational motion between the inner ring shaped portion 282 and the outer ring shaped portion 284 is present (to at least a certain extent), the measuring unit 205 and/or the control arrangement 201 is configured to determine that a state of malfunction of the bearing configuration 220 is at hand. After the method steps s510 and s520 a method step s530 may be performed.

The method step s530 comprises the step of taking actions. According to one example the step of taking actions comprises the step of generating an alarm signal when malfunction of the bearing configuration 220 has been determined. Hereby an operator at an early stage may be informed about that the bearing configuration 220 is malfunctioning. Hereby the operator may manually interrupt operation of the rotary encoder 200 and/or operation of an assembly connected to the shaft 210.

According to one example the step of taking actions comprises the step of automatically interrupting operation of the assembly connected to the rotary encoder 200 when malfunction of the bearing configuration 220 has been determined.

According to one example the step of taking actions comprises the step of to an operator propose to perform condition based maintenance of the rotary encoder 200, in particular condition based maintenance of the bearing configuration.

According to one example the step of taking actions comprises the step of, by means of a SCADA-system, control operation of the assembly connected to the rotary encoder 200 when malfunction of the bearing configuration 220 has been determined.

According to one example the step of taking actions comprises the step of automatically interrupting operation of the assembly connected to the rotary encoder 200. This may be performed by means of the control arrangement 201 or the measuring unit 205. According to one example interrupted operation of the assembly connected to the rotary encoder 200 is performed by switching the power off, thus shutting down the assembly at least partly. This may be performed by means of the control arrangement 201 or the measuring unit 205.

After the method step s530 the method ends/is returned.

Figure 6 is a diagram of one version of a device 600. The control arrangement 201 described with reference to e.g. Fig. 1a may in one version comprise the device 600. According to one example the measuring unit 205 may comprise the device 600. According to one example the rotation measurement circuitry of the stator 260 may comprise the device 600. The device 600 comprises a non-volatile memory 620, a data processing unit 610 and a read/write memory 650. The non-volatile memory 620 has a first memory element 630 in which a computer program, e.g. an operating system, is stored for controlling the function of the device 600. The device 600 further comprises a bus controller, a serial communication port, I/O means, an A/D converter, a time and date input and transfer unit, an event counter and an interruption controller (not depicted). The non-volatile memory 620 has also a second memory element 640.

According to an example embodiment there is provided a computer program comprising routines for detecting tension and/or compression associated with the housing 280 in connection to rotation of the shaft 210, wherein said tension and/or compression is caused by transmitted forces associated with the bearing configuration 220.

The computer program also comprises routines for determining malfunction of the bearing configuration based on said detected tension and/or compression.

The computer program P may comprise routines for generating an alarm signal when malfunction of the bearing configuration 220 has been determined.

The computer program P may comprise routines for automatically interrupting operation of the assembly connected to the rotary encoder 200 when malfunction of the bearing configuration 220 has been determined.

The computer program P may comprise routines for performing any one of the method steps detailed with reference to the disclosure.

The program P may be stored in an executable form or in compressed form in a memory 660 and/or in a read/write memory 650.

Where it is stated that the data processing unit 610 performs a certain function, it means that it conducts a certain part of the program which is stored in the memory 660 or a certain part of the program which is stored in the read/write memory 650.

The data processing device 610 can communicate with a data port 699 via a data bus 615. The non-volatile memory 620 is intended for communication with the data processing unit 610 via a data bus 612. The separate memory 660 is intended to communicate with the data processing unit via a data bus 611. The read/write memory 650 is arranged to communicate with the data processing unit 610 via a data bus 614. The links L201 and L202, for example, may be connected to the data port 699 (see Fig. 1a, 6).

When data are received on the data port 699, they are stored in the second memory element 640. When input data received have been stored, the data processing unit 610 will be prepared to conduct code execution as described above.

Parts of the methods herein described may be conducted by the device 600 by means of the data processing unit 610 which runs the program stored in the memory 660 or the read/write memory 650. When the device 600 runs the program, method steps and process steps herein described are executed.

The relevant method steps depicted herein may be performed by means of e.g. the device 600. Any suitable processing circuitry may be used for performing the disclosed method steps. The processing circuitry may be arranged in the rotary encoder 200 or externally of the rotary encoder 200, such as at the assembly.

The computer program product comprises a computer readable medium such as, for example a universal serial bus (USB) memory, a plug-in card, an embedded drive or a read only memory (ROM). The computer readable medium has stored thereon a computer program comprising program instructions. The computer program is loadable into the processing circuitry comprised in any of the control arrangement 201 or the rotation measurement circuitry of the stator 260. When loaded into the processing circuitry, the computer program may be stored in a memory associated with or comprised in the processing circuitry and executed by a processor. According to some embodiments, the computer program may, when loaded into and run by the processing circuitry, cause execution of method steps illustrated in Figure 5 or otherwise described herein.

According to one example there is provided a computer program product comprising instructions which, when the program is executed by a computer, e.g. the control arrangement 201, cause the computer to carry out any of the method steps depicted herein. According to one example there is provided a computer-readable storage medium comprising instructions which, when executed by a computer, e.g. the control arrangement 201, cause the computer to carry out any of the method steps depicted herein.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the embodiments being defined by the following claims.

## Claims

1. A rotary encoder (200) comprising a shaft (210) having a bearing configuration (220) arranged in a housing (280), the bearing configuration (220) being configured to allow rotation of the shaft (210) relative to said housing (280), a rotor (250) being attached to said shaft (210), the rotary encoder also comprises a stator (260), the rotary encoder (200) further comprising:
a strain sensor arrangement (270, 278, 274a, 274b, 276a, 276b, 205, 600) being configured to determine malfunction of the bearing configuration (220), said strain sensor arrangement is attached to the housing (280), wherein
the housing (280) has a flexible structure so as to, in connection to rotation of said shaft (210), facilitate transmitting forces associated with said bearing configuration (220) to said strain sensor arrangement,
the housing (280) comprises an inner ring shaped portion (282) and an outer ring shaped portion (284), said outer ring shaped portion (284) being arranged to at least partly surround said inner ring shaped portion (282), said inner and outer ring shaped portions being connected via a set of flexible members (285a, 285b, 285c),
said bearing configuration (220) has an outer ring shaped portion fixedly secured in said inner ring shaped portion (282),
said strain sensor arrangement is arranged to detect tension and/or compression associated with said housing (280), and
a malfunction of the bearing configuration (220) is determined based on said detected tension and/or compression.

2. The rotary encoder (200) according to claim 1, wherein said strain sensor arrangement comprises at least one strain sensor (274a; 274b) configured to detect tension and/or compression and a support member (270) for supporting said at least one strain sensor(274a, 274b), said support member (270) being attached to the housing (280) in such a way that detection of tension and/or compression by means of said at least one strain sensor (274a; 274b) is facilitated.

3. The rotary encoder (200) according to claim 2, wherein said strain sensor arrangement further comprises an electrical wire configuration (276a, 276b) and a measuring unit (205), the electrical wire configuration (276a, 276b) connecting the measuring unit (205) to said at least one strain sensor (274a; 274b) so that changes of electrical properties of said strain sensor (274a; 274b) based on said tension and/or compression are transferred to said measuring unit (205) for facilitating determining malfunction of the bearing configuration (220).

4. The rotary encoder (200) according to claim 3, wherein said support member (270) comprises a first connection portion (271, 275) attached to said inner ring shaped portion (282) and a second connection portion (279a) attached to said outer ring shaped portion (284).

5. The rotary encoder (200) according to anyone of claims 1-4, , wherein said support member (270) comprises a first connection portion (271, 275) attached to said inner ring shaped portion (282), a second connection portion (279a) attached to said outer ring shaped portion (284) and a third connection portion (279b) attached to said outer ring shaped portion (284), wherein said first connection portion (271, 275) is arranged between said second and third connection portion.

6. The rotary encoder (200) according to any preceding claims, wherein said strain sensor arrangement is arranged to determine that a malfunction of the bearing configuration (220) is at hand if said detected tension and/or compression is changed to a certain extent.

7. A method for determining malfunction of a bearing configuration (220) of a rotary encoder (200), said rotary encoder (200) being defined by claim 1, the method comprising the steps of:
- detecting (s510) tension and/or compression associated with said housing (280) in connection to rotation of said shaft (210), wherein said tension and/or compression is caused by transmitted forces associated with said bearing configuration (220); and
- determining (s520) malfunction of the bearing configuration (220) based on said detected tension and/or compression.

8. The method according to claim 7, wherein the step of determining malfunction of the bearing configuration is performed by means of a strain sensor arrangement (270, 274a, 274b, 276a, 276b, 205, 600).

9. A computer program product comprising instructions which, when the program is executed by a computer (201; 600), cause the computer (201; 600) to carry out any of the steps of claims 7 or 8.

10. A computer-readable storage medium comprising instructions which, when executed by a computer (201; 600), cause the computer (201; 600) to carry out any of the steps of claims 7 or 8.

## Patentansprüche

1. Drehgeber (200), umfassend eine eine Welle (210) mit einem Lageraufbau (220), angeordnet in einem Gehäuse (280), wobei der Lageraufbau (220) dazu konfiguriert ist, eine Drehung der Welle (210) relativ zum Gehäuse (280) zu ermöglichen, wobei ein Rotor (250) an der Welle (210) befestigt ist, wobei der Drehgeber auch einen Stator (260) umfasst, wobei der Drehgeber (200) ferner umfasst:
eine Dehnungssensoranordnung (270, 278, 274a, 274b, 276a, 276b, 205, 600), die dazu konfiguriert ist, eine Fehlfunktion des Lageraufbaus (220) zu bestimmen, wobei die Dehnungssensoranordnung am Gehäuse (280) befestigt ist, wobei das Gehäuse (280) eine flexible Struktur aufweist, um in Verbindung mit der Drehung der Welle (210) die Übertragung der mit dem Lageraufbau (220) assoziierten Kräfte auf die Dehnungssensoranordnung zu erleichtern, das Gehäuse (280) einen ringförmigen Innenabschnitt (282) und einen ringförmigen Außenabschnitt (284) umfasst, wobei der ringförmige Außenabschnitt (284) so angeordnet ist, dass er den ringförmigen Innenabschnitt (282) zumindest teilweise umgibt, wobei die ringförmigen Innen- und Außenabschnitte über eine Mehrzahl biegsamer Elemente (285a, 285b, 285c) miteinander verbunden sind,
der Lageraufbau (220) einen ringförmigen Außenabschnitt aufweist, der fest in dem ringförmigen Innenabschnitt (282) befestigt ist, die Dehnungssensoranordnung dazu ausgelegt ist, eine(n) mit dem Gehäuse (280) assoziierte(n) Zug und/oder Kompression zu erfassen, und eine Fehlfunktion des Lageraufbaus (220) auf der Grundlage des erfassten Zugs und/oder der erfassten Kompression bestimmt wird.

2. Drehgeber (200) nach Anspruch 1, wobei die Dehnungssensoranordnung mindestens einen Dehnungssensor (274a; 274b) umfasst, der dazu konfiguriert ist, Zug und/oder Kompression zu erfassen, und ein Stützelement (270) zum Abstützen des mindestens einen Dehnungssensor (274a, 274b), wobei das Stützelement (270) so am Gehäuse (280) befestigt ist, dass das Erfassen von Zug und/oder Kompression mittels des mindestens einen Dehnungssensors (274a; 274b) erleichtert wird.

3. Drehgeber (200) nach Anspruch 2, wobei die Dehnungssensoranordnung ferner einen elektrischen Drahtaufbau (276a, 276b) und eine Messeinheit (205) umfasst, wobei der elektrische Drahtaufbau (276a, 276b), die Messeinheit (205) mit dem mindestens einen Dehnungssensor (274a; 274b) verbindet, so dass Änderungen der elektrischen Eigenschaften des Dehnungssensors (274a; 274b) basierend auf dem Zug und/oder der Kompression auf die Messeinheit (205) übertragen werden, um das Bestimmen einer Fehlfunktion des Lageraufbaus (220) zu erleichtern.

4. Drehgeber (200) nach Anspruch 3, wobei das Stützelement (270) einen ersten Verbindungsabschnitt (271, 275) aufweist, der an dem inneren ringförmigen Abschnitt (282) befestigt ist, und einen zweiten Verbindungsabschnitt (279a), der an dem äußeren ringförmigen Abschnitt (284) befestigt ist.

5. Drehgeber (200) nach einem der Ansprüche 1 bis 4, wobei das Stützelement (270) einen ersten Verbindungsabschnitt (271, 275) aufweist, der an dem inneren ringförmigen Abschnitt (282) befestigt ist, einen zweiten Verbindungsabschnitt (279a), der an dem äußeren ringförmigen Abschnitt (284) befestigt ist, und einen dritten Verbindungsabschnitt (279b), der an dem äußeren ringförmigen Abschnitt (284) befestigt ist, wobei der erste Verbindungsabschnitt (271, 275) zwischen dem zweiten und dritten Verbindungsabschnitt angeordnet ist.

6. Drehgeber (200) nach vorhergehenden Ansprüchen, wobei die Dehnungssensoranordnung so angeordnet ist, dass eine Fehlfunktion des Lageraufbaus (220) vorliegt, wenn der erfasste Zug und/oder die erfasste Kompression in einem gewissen Maße verändert ist.

7. Verfahren zum Bestimmen einer Fehlfunktion eines Lageraufbaus (220) eines Drehgebers (200), wobei der Drehgeber (200) durch Anspruch 1 definiert ist, wobei das Verfahren die Schritte umfasst:
- Erfassen (s510) eines Zugs und/oder einer Kompression, die mit dem Gehäuse (280) assoziiert sind, in Verbindung mit der Drehung der Welle (210), wobei der Zug und/oder die Kompression durch übertragene Kräfte verursacht wird, die mit dem Lageraufbau (220) assoziiert sind,
- Bestimmen (s520) einer Fehlfunktion des Lageraufbaus (220) auf der Grundlage des erfassten Zugs und/oder der erfassten Kompression.

8. Verfahren nach Anspruch 7, wobei der Schritt des Bestimmens einer Fehlfunktion des Lageraufbaus mittels einer Dehnungssensoranordnung (270, 274a, 274b, 276a, 276b, 205, 600) durchgeführt wird.

9. Computerprogrammprodukt, umfassend Anweisungen, die, wenn das Programm durch einen Computer (201; 600) ausgeführt wird, den Computer (201; 600) dazu veranlassen, einen der Schritte nach Anspruch 7 oder 8 durchzuführen.

10. Computerlesbares Speichermedium, umfassend Anweisungen, die, wenn durch einen Computer (201; 600) ausgeführt, den Computer (201; 600) dazu veranlassen, einen der Schritte nach Anspruch 7 oder 8 durchzuführen.

## Revendications

1. Codeur rotatif (200) comprenant un arbre (210) ayant une configuration de palier (220) agencée dans un boîtier (280), la configuration de palier (220) étant configurée pour permettre la rotation de l'arbre (210) par rapport audit boîtier (280), un rotor (250) étant fixé audit arbre (210), le codeur rotatif comprenant également un stator (260), le codeur rotatif (200) comprenant en outre :
un agencement de capteurs de contrainte (270, 278, 274a, 274b, 276a, 276b, 205, 600) étant configuré pour déterminer un dysfonctionnement de la configuration de palier (220), ledit agencement de capteurs de contrainte étant fixé au boîtier (280), dans lequel le boîtier (280) a une structure flexible de manière à, en relation avec la rotation dudit arbre (210), faciliter la transmission de forces associées à ladite configuration de palier (220) audit agencement de capteurs de contrainte,
le boîtier (280) comprend une partie en forme d'anneau intérieur (282) et une partie en forme d'anneau extérieur (284), ladite partie en forme d'anneau extérieur (284) étant agencée de manière à entourer au moins partiellement ladite partie en forme d'anneau intérieur (282), lesdites parties en forme d'anneaux intérieur et extérieur étant reliées par un ensemble d'éléments flexibles (285a, 285b, 285c),
ladite configuration de palier (220) a une partie en forme d'anneau extérieur fixée de manière fixe dans ladite partie en forme d'anneau intérieur (282),
ledit agencement de capteur de contrainte est agencé pour détecter une tension et/ou une compression associée audit boîtier (280), et
un dysfonctionnement de la configuration de palier (220) est déterminé sur la base de ladite tension et/ou compression détectée.

2. Codeur rotatif (200) selon la revendication 1, dans lequel ledit agencement de capteurs de contrainte comprend au moins un capteur de contrainte (274a ; 274b) configuré pour détecter une tension et/ou une compression et un élément de support (270) pour supporter ledit au moins un capteur de contrainte (274a, 274b), ledit élément de support (270) étant fixé au boîtier (280) de telle manière que la détection d'une tension et/ou d'une compression au moyen dudit au moins un capteur de contrainte (274a ; 274b) est facilitée.

3. Codeur rotatif (200) selon la revendication 2, dans lequel ledit agencement de capteurs de contrainte comprend en outre une configuration de fils électriques (276a, 276b) et une unité de mesure (205), la configuration de fils électriques (276a, 276b) reliant l'unité de mesure (205) audit au moins un capteur de contrainte (274a ; 274b) de sorte que les changements des propriétés électriques dudit capteur de contrainte (274a ; 274b) basés sur ladite tension et/ou compression sont transférés à ladite unité de mesure (205) afin de faciliter la détermination d'un dysfonctionnement de la configuration de palier (220).

4. Codeur rotatif (200) selon la revendication 3, dans lequel ledit élément de support (270) comprend une première partie de connexion (271, 275) fixée à ladite partie en forme d'anneau intérieur (282) et une deuxième partie de connexion (279a) fixée à ladite partie en forme d'anneau extérieur (284).

5. Codeur rotatif (200) selon l'une quelconque des revendications 1 à 4, dans lequel ledit élément de support (270) comprend une première partie de connexion (271, 275) fixée à ladite partie en forme d'anneau intérieur (282), une deuxième partie de connexion (279a) fixée à ladite partie en forme d'anneau extérieur (284) et une troisième partie de connexion (279b) fixée à ladite partie en forme d'anneau extérieur (284), dans lequel ladite première partie de connexion (271, 275) est agencée entre lesdites deuxième et troisième parties de connexion.

6. Codeur rotatif (200) selon l'une quelconque des revendications précédentes, dans lequel ledit agencement de capteurs de contrainte est agencé pour déterminer qu'un dysfonctionnement de la configuration de palier (220) est imminent si ladite tension et/ou compression détectée est modifiée dans une certaine mesure.

7. Procédé pour déterminer le dysfonctionnement d'une configuration de palier (220) d'un codeur rotatif (200), ledit codeur rotatif (200) étant défini par la revendication 1, le procédé comprenant les étapes suivantes :
- la détection (s510) d'une tension et/ou d'une compression associée audit boîtier (280) en relation avec la rotation dudit arbre (210), dans lequel ladite tension et/ou compression est provoquée par des forces transmises associées à ladite configuration de palier (220) ; et
- la détermination (s520) d'un dysfonctionnement de la configuration de palier (220) sur la base de ladite tension et/ou compression détectée.

8. Procédé selon la revendication 7, dans lequel l'étape consistant à déterminer le dysfonctionnement de la configuration de palier est réalisée au moyen d'un agencement de capteurs de contrainte (270, 274a, 274b, 276a, 276b, 205, 600).

9. Produit de programme informatique comprenant des instructions qui, lorsque le programme est exécuté par un ordinateur (201 ; 600), amènent l'ordinateur (201 ; 600) à réaliser l'une quelconque des étapes des revendications 7 ou 8.

10. Support de stockage lisible par ordinateur comprenant des instructions qui, lorsqu'elles sont exécutées par un ordinateur (201 ; 600), amènent l'ordinateur (201 ; 600) à réaliser l'une quelconque des étapes des revendications 7 ou 8.
